## Europäisches Patentamt

## European Patent Office

## Office européen des brevets

(19)

(11) Numéro de publication : **0 041 883**

**B1**

(12)

# FASCICULE DE BREVET EUROPÉEN

(45) Date de publication du fascicule du brevet :
05.09.84

(51) Int. Cl.³ : **H 04 N 3/18**

(21) Numéro de dépôt : **81400822.3**

(22) Date de dépôt : **22.05.81**

(54) **Dispositif d'alimentation à régulation par découpage, combiné au circuit de balayage-ligne d'un récepteur de télévision qu'il alimente.**

(30) Priorité : **10.06.80 FR 8012862**

(43) Date de publication de la demande :
**16.12.81 Bulletin 81/50**

(45) Mention de la délivrance du brevet :
**05.09.84 Bulletin 84/36**

(84) Etats contractants désignés :
**AT DE FR IT SE**

(56) Documents cités :
**FR-A- 2 228 338**
**FR-A- 2 261 670**
**US-A- 3 571 697**
**Articles de G. V. SCHAIK dans "MULLARD TECHNI-
CAL COMMUNICATIONS", Juillet 1977, No. 135, P.
181 à 195 et Octobre 1977, No. 135, p. 210-226**

(73) Titulaire : **Deutsche Thomson-Brandt GmbH
Hermann-Schwer-Strasse 3
D-7730 Villingen-Schwenningen (DE)**

(72) Inventeur : **Sivanesan
THOMSON-CSF SCPI 173, bld Haussmann
F-75360 Paris Cedex 08 (FR)**
Inventeur : **Geiger, Erich
THOMSON-CSF SCPI 173, bld Haussmann
F-75360 Paris Cedex 08 (FR)**
Inventeur : **Rilly, Gérard
THOMSON-CSF SCPI 173, bld Haussmann
F-75360 Paris Cedex 08 (FR)**

Jouve, 18, rue St-Denis, 75001 Paris, France

EP 0 041 883 B1

## Description

La présente invention se rapporte à un dispositif d'alimentation à régulation par découpage combiné au circuit de balayage-ligne (horizontal) d'un récepteur de télévision qu'il alimente en tension continue. Elle concerne, plus particulièrement, des dispositifs d'alimentation en tension continue du type assurant l'augmentation en sortie du dispositif, du niveau d'une tension continue d'entrée et la régulation de ce niveau par un découpage récurrent de cette tension d'entrée, ce découpage étant synchrone avec la fréquence de ligne (horizontale) du récepteur de télévision alimenté à l'aide de ce dispositif.

Des dispositifs d'alimentation à augmentation de niveau et à régulation par découpage de ce type sont connus notamment des publications US-A3 571 697 (ou 3 736 496) et ils s'apparentent à des dispositifs d'alimentation par découpage ou convertisseurs continu-continu du type à accumulation (dit « flyback » en anglais), non isolés, dans lesquels le trajet collecteur-émetteur d'un transistor de commutation bipolaire est connecté en série avec une inductance de commutation entre les bornes d'une source fournissant une tension d'entrée et une diode de redressement est connectée entre la jonction de l'inductance avec le transistor et l'une des armatures d'un condensateur de filtrage (en parallèle avec la charge) de telle sorte que le courant emmagasiné dans l'inductance pendant l'intervalle de conduction du transistor soit utilisé pour charger le condensateur (et alimenter la charge) à travers la diode au cours de l'intervalle de blocage consécutif de ce dernier. L'utilisation d'un dispositif d'alimentation par découpage de ce type dans des récepteurs de télévision pour alimenter, notamment, le circuit de balayage-ligne de celui-ci, a été décrit, par exemple, dans deux articles de Van Schaik respectivement intitulés « An Introduction to Switched-More Power Supplies in TV Receivers » et « Control Circuits for SMPS in TV Receivers », respectivement parus aux pages 93 à 108 du N° 3, du Vol. 34, de Septembre 1976 et aux pages 162 à 180 du N° 4 de ce même volume, de Décembre 1976, de la revue néerlandaise de langue anglaise « Electronic Applications Bulletin » de Philips', ou aux pages 181 à 195 du n° 135 de juillet 1977 et aux pages 210 à 226 du n° 136 d'octobre 1977, de la revue britannique « Mullard Technical Communications ». Comme aucun des dispositifs d'alimentation par découpage décrits dans ces articles, isolés ou non du réseau, qu'ils utilisent un convertisseur « série » ou « direct » (dit « forward » en anglais) ou un convertisseur « parallèle » ou « à accumulation » (« flyback »), ne fournit à sa sortie de tension continue pour alimenter le circuit de balayage-ligne avant que le transistor de découpage ait été débloqué (saturé ou conducteur) une ou plusieurs fois, le circuit de commande de ce transistor doit comporter un oscillateur à relaxation autonome et doit être alimenté par la même tension continue d'entrée (tension du réseau alternatif, redressée et filtrée) que le circuit de découpage comprenant l'inductance et le transistor en série. La synchronisation du découpage avec le balayage-ligne ne peut intervenir qu'ultérieurement, lorsque l'oscillateur-ligne et/ou le circuit de balayage-ligne tout entier ont commencé à fonctionner dès que sa tension d'alimentation qui lui est fournie par le dispositif fonctionnant de manière autonome au démarrage, est devenue suffisante. Cette synchronisation du découpage avec le balayage-ligne, avantageuse pour réduire ou éliminer les interférences visibles sur l'écran, qui sont engendrées par des rayonnements d'énergie haute-fréquence dues aux commutations à transitions raides, notamment lors du blocage du transistor de découpage, est généralement effectuée à l'aide d'un signal comprenant les impulsions de retour-ligne, prélevé aux bornes d'un enroulement secondaire auxiliaire du transformateur-ligne dont l'enroulement primaire est généralement connecté entre la sortie du dispositif d'alimentation par découpage et l'une des bornes de l'interrupteur de balayage-ligne qui équipe l'étage de sortie. Il est également possible d'utiliser à cette fin le signal fourni par l'oscillateur-ligne (voir, par exemple, la publication FR-A-2 040 217).

Dans une alimentation par découpage d'un récepteur de télévision décrit dans la publication FR-A-2 5261 670, le circuit de commande du transistor de découpage d'un convertisseur du type « série » ou « direct », alimenté par la tension du réseau redressée et filtrée, comprend un basculeur bistable dont l'une des sorties est rebouclée à l'une de ses entrées de déclenchement par l'intermédiaire d'un circuit de régulation comprenant un générateur de tension en forme de dents de scie et un comparateur de tension fournissant des transitions qui commandent les basculements du basculeur, lorsque la tension en dents de scie atteint le niveau d'une tension proportionnelle à l'amplitude de l'impulsion de retour-ligne et dont l'une ou l'autre des sorties complémentaires est rebouclée à son autre entrée de déclenchement par l'intermédiaire d'une boucle de démarrage comprenant un générateur de tension de forme croissante de manière à approcher asymptotiquement un niveau prédéterminé, inférieur à une fraction prédéterminée du niveau nominal que doit atteindre l'amplitude de l'impulsion de retour-ligne en fonctionnement normal, et un autre comparateur de tension en fournissant des transitions qui commandent le retour récurrent du basculeur dans son état initial jusqu'à ce que l'impulsion de retour-ligne ait atteint ou dépassé une amplitude de seuil inférieure de peu à son amplitude nominale. Lorsque cette amplitude de seuil a été dépassé, le rebasculement du basculeur est commandé par les impulsions de retour-ligne, ici de polarité négative, qui supplantent les impulsions de démarrage. Un tel agencement est équivalent à un basculeur du type multivibrateur astable pendant la période de démarrage qui devient ensuite un basculeur monostable déclenché par les impulsions de retour-ligne et dont l'état quasi-stable présente une durée variable, fonction de l'amplitude de ces impulsions en vue d'en obtenir une régulation par le rapport cyclique. L'impulsion qui commande la fermeture de l'interrupteur (la saturation du transistor de découpage) débute ici avec le front avant de l'impulsion de retour-ligne et sa durée ou longueur est modulée en fonction du courant débité par la charge et de la variation de la tension redressée et filtrée, de sorte que sa fin commandant l'ouverture de l'interrupteur (le blocage du transistor) de découpage, se produit pendant l'aller du balayage horizontal. On peut voir ainsi que cette alimentation par découpage, comme la plupart de celles connues, effectue la régulation de sa tension de sortie par la variation du rapport cyclique en fonction inverse du niveau de celle-ci.

Comme le rayonnement haute-fréquence est justement le plus intense lors des transitions brusques de courant dans l'inductance de découpage et de tension aux bornes de celle-ci, on peut constater l'apparition d'une ou de plusieurs lignes verticales (claires ou sombres suivant le sens de la modulation de la porteuse) contrastant avec le contenu normal de l'image, dont la localisation sur l'écran dépend de la durée de l'impulsion commandant le transistor de découpage. L'effet de ce rayonnement devient particulièrement gênant lorsque le signal d'entrée de la tête haute-fréquence (« tuner » en anglais) est faible, notamment lorsque le canal choisi est situé dans la partie inférieure de la bande VHF, car le dispositif de commande automatique de gain du récepteur agit sur le gain des étages d'entrée haute-fréquence et/ou de fréquence intermédiaire, de telle sorte que la sensibilité (l'amplification) du récepteur est alors maximale et ceci également en ce qui concerne les parasites ainsi rayonnés.

La présente invention permet, d'une part, d'éviter ou au moins de réduire notablement les interférences visibles sur l'écran en commandant le blocage du transistor de découpage en synchronisme avec le front avant de l'impulsion de retour-ligne et, d'autre part, d'assurer le démarrage du circuit de balayage-ligne en disposant d'un circuit de commande simple sans oscillateur particulier, ainsi qu'une protection efficace, particulièrement du transistor de découpage qui reste bloqué lorsque le circuit de balayage-ligne ne fonctionne pas. Ceci est rendu possible par l'utilisation d'un dispositif d'alimentation à augmentation de niveau et à régulation par découpage (appelé « boost » ou « switching regulator » en anglais) du type décrit dans la publication US-A-3 571 697 et dont le circuit de commande comprend suivant l'invention, le circuit de balayage et, notamment son étage de sortie, qu'il alimente.

L'invention a pour objet un dispositif d'alimentation à augmentation de niveau et à régulation de sa tension de sortie, combiné à un circuit de balayage-ligne d'un récepteur de télévision, dont il alimente l'étage de sortie et qui comprend en cascade un oscillateur-ligne, un étage d'attaque et ledit étage de sortie comprenant un transistor de balayage en série avec l'enroulement primaire d'un transformateur-ligne, ce dispositif comprenant une inductance et le trajet collecteur-émetteur d'un transistor de découpage connectés en série entre les pôles d'une source de tension continue d'entrée, une diode de redressement reliée par son anode à la jonction entre l'inductance et le collecteur du transistor de découpage et par sa cathode à l'une des armatures d'un condensateur de filtrage dont l'autre armature est connectée à l'émetteur du transistor de découpage, de façon à fournir entre ces armatures une tension continue initiale, inférieure de peu à la tension d'entrée, lorsque le transistor de découpage est bloqué, et une tension continue de sortie régulée de niveau supérieur à la tension d'entrée, lorsque le transistor de découpage est alternativement saturé et bloqué de manière récurrente, le niveau de cette tension de sortie étant fonction du rapport cyclique des états de ce transistor, et un circuit de commande alimentant la base du transistor de découpage et incluant un étage régulateur comparant une fraction réglable de la tension de sortie à une tension de référence fixe et fournissant un courant ou une tension de régulation proportionnels à la différence entre ces tensions comparées, un modulateur de la largeur d'impulsions déclenché au moyen d'un signal récurrent synchronisé avec les signaux de balayage-ligne et fournissant un signal rectangulaire dont le rapport cyclique varie en fonction du courant ou de la tension de régulation, et un autre étage d'attaque recevant le signal rectangulaire et commandant le transistor de découpage.

Suivant l'invention, le dispositif d'alimentation alimentant également l'oscillateur-ligne et l'étage d'attaque du circuit de balayage-ligne, le démarrage de la régulation et de l'augmentation de la tension de sortie est assurée par le démarrage autonome préalable du circuit de balayage-ligne tout entier lors de son alimentation par la tension initiale que fournit le dispositif d'alimentation dès sa mise sous tension, le circuit de balayage-ligne fournissant alors des impulsions récurrentes de déclenchement au modulateur de la largeur d'impulsions, et l'une des entrées d'alimentation de l'autre étage d'attaque reçoit directement une première forme d'onde de tension dont les alternances positives comportent des plateaux de tension constante et dont les alternances négatives comportent des impulsions de retour-ligne de polarité négative, fournie par un premier enroulement secondaire du transformateur ligne, en vue de commander le blocage du transistor de découpage de manière sensiblement simultanée avec celui de balayage.

Autrement dit, dans le dispositif d'alimentation par découpage objet de l'invention, le circuit de balayage-ligne fait partie intégrante du circuit de commande du transistor de découpage, car c'est ce circuit qui détermine, dès son démarrage par la mise sous tension du dispositif, la période de récurrence du signal rectangulaire à rapport cyclique variable, fourni par le modulateur de la largeur d'impulsions.

L'une des entrées d'alimentation de l'autre étage d'attaque reçoit directement une première forme d'onde de tension dont les alternances positives comportent des plateaux de tension constante et dont les alternances négatives comportent des impulsions de retour-ligne de polarité négative, fournie par un premier enroulement secondaire du transformateur-ligne, en vue de commander le blocage du transistor de découpage de manière sensiblement simultanée avec celui du transistor de balayage.

L'invention sera mieux comprise et d'autres de ses objets, caractéristiques, particularités et avantages apparaîtront de la description qui suit et des dessins annexés s'y rapportant, donnés uniquement à titre d'exemple, sur lesquels :

la figure 1 est un schéma, en partie synoptique et en partie de principe, d'un dispositif d'alimentation combiné au circuit de balayage-ligne suivant l'invention ;

la figure 2 représente des formes d'onde de deux tensions et d'un courant à divers points du circuit de la figure 1 ;

la figure 3 est un schéma synoptique du circuit de commande du transistor de découpage ;

les figures 4 et 5 sont des schémas de principe de deux modes de réalisation différents du circuit d'attaque (« driver » en anglais) 20 constituant l'étage de sortie du circuit de commande de la figure 3 ;

la figure 6 est le schéma synoptique d'un mode de réalisation du modulateur de la largeur d'impulsion (« pulse-width modulator » en anglais) 10 du circuit de la figure 3 ;

la figure 7 représente trois formes d'onde de tension à divers points du circuit de la figure 6 ;

la figure 8 est le schéma de principe d'un mode de réalisation du modulateur de la largeur d'impulsion 10 du circuit de la figure 3, utilisant des composants discrets ;

la figure 9 représente une forme d'onde de courant et deux formes d'onde de tension à divers points du circuit de la figure 8 ;

la figure 10 est le schéma de principe d'un mode de réalisation classique d'un étage régulateur 30 adapté à alimenter l'entrée de modulation du modulateur de la figure 8 ; et

les figures 11 et 12 sont des schémas de principe partiels respectives de deux modes de réalisation d'un dispositif d'alimentation conforme à l'invention.

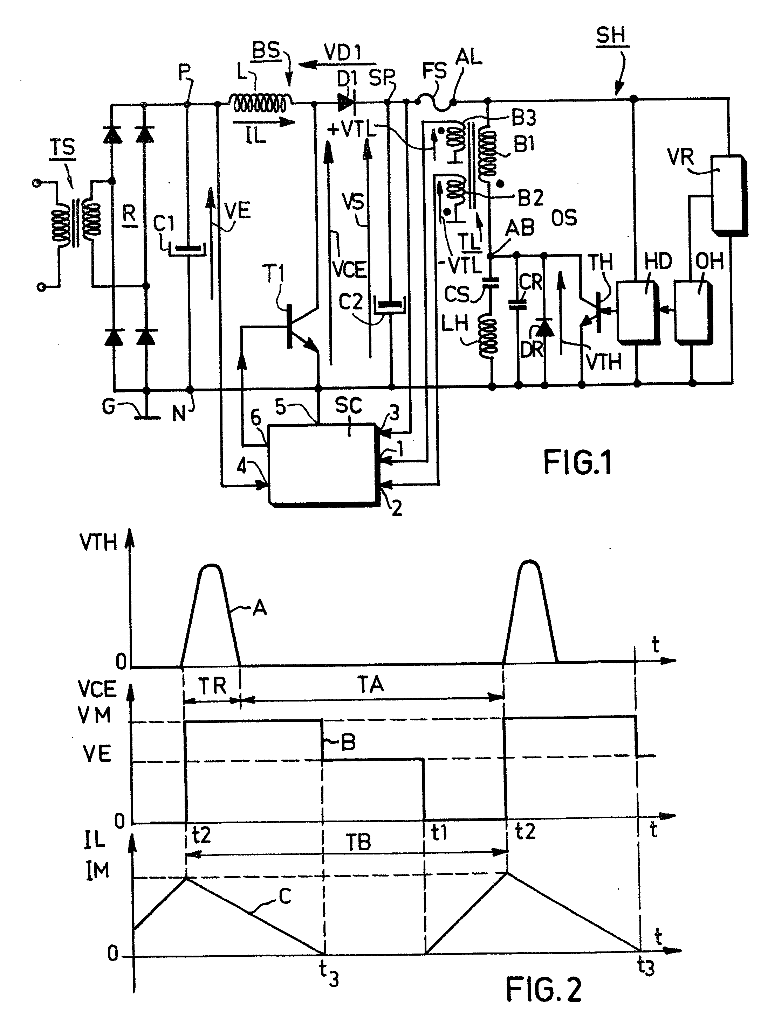

La figure 1 montre le schéma de principe des étages de puissance du dispositif d'alimentation et du circuit de balayage-ligne du récepteur de télévision, qu'il alimente et synoptiquement (sous la forme de blocs) les circuits respectifs qui les commandent.

La tension continue d'entrée VE qui n'est pas régulée, est fournie par un pont redresseur R à quatre diodes, alimenté sur son entrée par l'enroulement secondaire d'un transformateur abaisseur d'isolement TS abaisseur de tension, dont l'enroulement primaire est alimenté par le réseau alternatif. Les bornes de sortie du pont redresseur R sont respectivement reliées aux armatures d'un premier condensateur de filtrage C1 entre lesquelles est prélevée cette tension d'entrée VE.

Le pôle positif P de cette source de tension d'entrée VE est relié à l'une des bornes d'une inductance L d'emmagasinage d'énergie, tandis que son pôle négatif N est relié à la masse G du récepteur, qui est isolée du réseau. L'autre borne de l'inductance L est reliée, d'une part, au collecteur d'un premier transistor T1 de commutation bipolaire de type NPN, dont l'émetteur est relié à la masse G, et d'autre part, à l'anode d'une première diode D1 dont la cathode est reliée à l'armature positive d'un second condensateur de filtrage C2. L'armature négative de ce second condensateur C2 étant reliée à la masse G, la tension de sortie VS qui alimente la charge est prélevée entre ses bornes.

Un tel dispositif d'alimentation BS à augmentation (dit « step-up » ou « boost » en anglais) et à régulation du niveau de sa tension de sortie, du fait que son premier transistor de commutation T1 et sa première diode D1 sont connectés de façon à respectivement conduire des courants parcourant l'inductance L dans le même sens, fournit sur sa sortie constituée par les bornes du second condensateur C2, une tension continue initiale VSI dès le branchement sur le réseau de l'enroulement primaire du transformateur d'isolement TS. Cette tension initiale VSI qui est égale à la tension d'entrée VE déduction faite de la tension de déchet directe VD1 à travers la première diode D1, est fournie ensuite à la charge jusqu'à la mise en route du circuit de commande SC dont la sortie 6 est reliée à la base du premier transistor T1 afin de le rendre alternativement saturé et bloqué.

Lorsque le premier transistor T1 devient saturé en polarisant positivement sa jonction base-émetteur, son trajet collecteur-émetteur réunit la jonction de l'inductance L avec l'anode de la première diode D1 à la masse G. La diode D1 étant alors polarisée à l'envers, elle cesse de conduire, et l'inductance L réunie par le premier transistor T1 entre les pôles positif P et négatif N de la source fournissant la tension continue d'entrée non-régulée VE, conduit alors un courant IL linéairement croissant de manière à emmagasiner de l'énergie qui croît avec le carré de la durée de conduction du premier transistor T1, jusqu'au blocage de celui-ci. A l'instant de blocage du premier transistor T1, obtenu après que le circuit de commande SC ait ramené sa tension base-émetteur à zéro ou au-dessous, la tension aux bornes de l'inductance L s'inverse de telle sorte qu'à sa jonction avec le collecteur du transistor T1 et l'anode de la diode D1, apparaît une tension VM supérieure à la tension d'entrée VE, qui a pour effet de polariser la diode D1 en direct. Par conséquent, la diode D1 conduit à partir de l'instant du blocage du transistor T1 un courant linéairement décroissant jusqu'à la disparition de l'énergie emmagasinée sous forme de courant IL dans l'inductance, qui charge le second condensateur C2 à une tension de sortie VS supérieure à la tension d'entrée VE. La régulation du niveau de la tension de sortie VS est effectuée ici de façon classique, par la variation du rapport cyclique, c'est-à-dire du rapport (quotient) entre la durée de l'intervalle de conduction du transistor T1 et la somme des durées respectives de deux de ses intervalles de conduction et de blocage successifs, en fonction de la tension de sortie VS désirée (déterminée par une comparaison avec une tension de référence stable).

Suivant l'invention, un dispositif d'alimentation BS du type décrit ci-dessus est combiné au circuit de balayage-ligne SH d'un récepteur de télévision, qu'il alimente, afin que ce dernier fasse partie intégrante de son circuit de commande et puisse déterminer la période de répétition de son fonctionnement et afin que la régulation susmentionnée par le rapport cyclique puisse rendre stable l'amplitude crête-à-crête du courant de balayage en forme de dents de scie et/ou la très haute-tension polarisant les électrodes (anode, électrode de focalisation et grille d'accélération) du tube à rayons cathodiques, obtenue par le redressement des impulsions de retour-ligne fournies par un enroulement secondaire élévateur (non représenté) du transformateur-ligne TL.

Le circuit de balayage-ligne SH qui comporte en cascade l'oscillateur-ligne (ou horizontal) OH dont le circuit (boucle) d'asservissement en phase avec le signal de synchronisation-ligne séparé du signal vidéo-composite n'a pas été représenté ici, l'étage d'attaque HD commandé par l'oscillateur-ligne OH et commandant l'étage de sortie OS du balayage-ligne, est tout entier alimenté par le dispositif d'alimentation décrit ci-dessus. En effet, l'entrée d'alimentation positive AL du circuit de balayage SH est reliée au moyen d'un fusible FS à la jonction de la cathode de la première diode D1 avec l'armature positive du second condensateur C2, qui constitue la borne de sortie positive SP du dispositif d'alimentation BS. Cette entrée d'alimentation AL est réunie directement à celle du circuit d'attaque HD et, de préférence par l'intermédiaire d'un régulateur de tension VR classique à diode Zener ou à transistor de ballast série, à celle de l'oscillateur-ligne OH, qui sont par ailleurs reliés à la masse G isolée.

L'entrée d'alimentation AL du circuit de balayage-ligne SH est reliée, en outre, à l'une des bornes de l'enroulement primaire B1 du transformateur-ligne TL, dont l'autre borne AB est reliée, en parallèle, au collecteur d'un autre transistor de commutation TH, de type NPN, dit transistor de balayage, à la cathode d'une seconde diode DR, dite de récupération parallèle, à l'une des armatures d'un autre condensateur CR, dit condensateur de retour-ligne, et à l'une des armatures d'un condensateur supplémentaire CS, dit condensateur d'effet « S » ou d'aller, qui alimente les bobines de déviation horizontale LH dont une borne est reliée à son autre armature, pendant les intervalles d'aller du balayage. L'émetteur du transistor de balaye TH, l'anode de la diode de récupération « shunt » DR, l'autre armature du condensateur de retour CR et l'autre borne des bobines de déviation horizontale LH sont reliés à la masse G. Cet ensemble d'éléments ainsi reliés constitue l'étage de sortie OS du balayage-ligne dont le fonctionnement est bien connu et ne fait pas partie de l'invention.

Comme il a été dit précédemment, dès le branchement de l'enroulement primaire du transformateur d'isolement abaisseur TS sur le réseau, le redresseur R alimente le premier condensateur de filtrage C1 afin de fournir entre ses bornes P et N une basse tension continue VE non régulée. Le premier transistor T1 étant alors bloqué, cette tension d'entrée est appliquée à travers l'inductance L et la première diode D1, au second condensateur C2 pour obtenir entre la borne SP et la masse G une tension de sortie initiale VSI sensiblement égale à VE-VD1 qui est approximativement égale à 60 pour cent de la tension de sortie régulée VS. Cette tension de sortie initiale VSI (égale à 0,6 VS environ) est suffisante pour la mise en oscillation autonome de l'oscillateur-ligne OH. Celui-ci fournit sur sa sortie reliée à l'entrée du circuit d'attaque HD des impulsions à une fréquence autonome proche de la fréquence-ligne. En réponse à ces impulsions, le circuit d'attaque HD également alimenté par le dispositif BS fournit à la base du transistor de balayage TH des impulsions commandant son blocage périodique à cette fréquence autonome et son déblocage consécutif après un intervalle supérieur à la durée de l'intervalle de retour-ligne, afin que la diode de récupération DR puisse reprendre le courant du déviateur LH au cours de la première moitié de l'aller du balayage. Pendant le retour du balayage, le transistor TH et la diode DR étant bloqués, les énergies emmagasinées sous la forme de courants respectivement dans les inductances du déviateur LH et de l'enroulement primaire B1 du transformateur-ligne TL qui sont alors, du point de vue du courant alternatif, connectés en parallèle, s'écoulent de manière oscillatoire à travers le condensateur de retour CR qui forme avec elles un circuit résonnant parallèle dont la période de résonance détermine la durée de l'intervalle de retour-ligne.

Il apparaît alors périodiquement entre le point AB et la masse G une impulsion de tension VTH de forme quasi demi sinusoïdale, qui a été représentée sur le diagramme A de la figure 2. La valeur moyenne de cette tension VTH étant alors égale à VSI, au démarrage, et à VS, en régime établi. Le transformateur-ligne TL comporte, outre un enroulement très haute-tension et d'autres enroulements destinés à alimenter des montages redresseurs, non représentés, deux enroulements secondaires B2, B3 fournissant entre leurs bornes des formes d'onde de tension comprenant les impulsions de retour-ligne avec des valeurs moyennes nulles et avec des polarités respectivement négative et positive.

Ceci signifie que le premier enroulement secondaire B2 fournit une forme d'onde de tension − VTL qui, entre deux impulsions de retour-ligne successives, comprend un plateau positif dont le niveau est égal à la valeur moyenne de ces impulsions et qui est utilisée, suivant l'invention, pour commander le blocage du premier transistor T1 de telle sorte que les interférences qui seraient autrement visibles, ne se produisent qu'au cours des intervalles d'effacement-ligne (ou de suppression dit « blanking » en anglais) comprenant ceux de retour-ligne. Le second enroulement secondaire B3 fournit alors une forme d'onde de tension + VTL qui est l'inverse de ou complémentaire à la précédente − VTL.

L'une des bornes de chacun de ces enroulements secondaires B2, B3 est reliée à la masse G, tandis que leurs autres bornes sont respectivement reliées à deux entrées 2 et 1 du circuit de commande SC. Une troisième entrée 3 de celui-ci est reliée à la sortie SP du dispositif d'alimentation BS et une quatrième entrée 4 est reliée au pôle positif P de la source de la tension d'entrée VE. Une cinquième borne 5 du circuit de commande SC est reliée à la masse G (ou pôle négatif N) et sa sortie 6 est reliée à la base du premier transistor T1. Ce circuit de commande SC provoque à la suite de la mise en route du circuit de balayage-ligne SH, une première mise en saturation du premier transistor T1 à un instant déterminé par un modulateur de la largeur d'impulsions opérant par la comparaison classique d'une forme d'onde de tension en dents de scie dont l'élaboration est commandée par une première impulsion de retour-ligne, à une tension de régulation, fonction de la tension de sortie VS. Pendant cet intervalle de saturation du transistor T1 qui s'étend jusqu'au front avant de l'impulsion de retour-ligne suivante, l'énergie est emmagasinée dans l'inductance L.

A partir de l'instant de blocage du transistor T1, la diode D1 transfère cette énergie emmagasinée au second condensateur C2, aux bornes duquel elle provoque un accroissement de la tension VS par rapport à sa valeur initiale, jusqu'à l'annulation du courant dans la diode D1 qui devient alors polarisée à l'envers.

Les formes d'onde des tensions collecteur-émetteur VTH du transistor de balayage TH et VCE du transistor de commutation T1 en régime établi, ont été respectivement illustrées par les diagrammes A et B de la figure 2. Le diagramme C de la figure 2 montre la forme d'onde correspondante du courant IL parcourant l'inductance L.

Lorsque la base du premier transistor T1 reçoit de la sortie 6 du circuit de commande SC, un signal rectangulaire qui provoque son déblocage (saturation) à l'instant t1, sa tension collecteur-émetteur VCE (diagramme B) devient proche de zéro ($V_{CEsat}$) et l'inductance L est parcourue d'un courant IL (diagramme C) linéairement croissant à partir de l'instant t1 jusqu'à l'instant t2 de reblocage du transistor T1, qui est commandé par le front avant de l'impulsion de retour-ligne VTH (diagramme A). Le courant collecteur du transistor T1 s'étant annulé après l'écoulement du temps de stockage des porteurs minoritaires dans la base, la tension aux bornes de l'inductance L inverse sa polarité de manière à s'ajouter à la tension d'entrée VE de telle sorte que la tension émetteur-collecteur VCE (diagramme B) atteint alors un niveau VM supérieur à VS (ainsi qu'à VE) de manière à appliquer une polarisation directe à la première diode D1, qui devient conductrice du courant IL dans l'inductance L. Ce courant IL devient à partir de l'instant t2 où il atteint sa valeur maximale IM, linéairement décroissant et il traverse la première diode D1 dans le sens passant pour recharger le second condensateur C2 et alimenter, notamment, le circuit balayage SH.

Lorsque le courant IL traversant la première diode D1 s'annule à l'instant t3, la tension collecteur-émetteur VCE du premier transistor T1 devient égale à la tension d'entrée non régulée VE jusqu'au prochain instant de déblocage du transistor T1, et la première diode D1 reste polarisée à l'envers jusqu'à l'instant de reblocage consécutif de ce dernier.

De ce qui précède, on peut voir aisément que le principal avantage de ce dispositif combiné réside dans le fait qu'un oscillateur unique OH appartenant au circuit de balayage SH suffit pour commander les deux transistors interrupteurs TH et T1.

D'autre part, une surcharge éventuelle dans les circuits du téléviseur, telle que par exemple un court-circuit du transistor de balayage TH, se traduit par une surintensité dans la diode D et dans l'inductance L. Le premier transistor T1 lui ne subit pas cette surintensité et il est donc protégé. Pour protéger le reste du récepteur de télévision ainsi que l'inductance L et la première diode D1, on peut mettre en série sur la ligne d'alimentation partant du second condensateur C2 un fusible FS. Ce fusible FS peut également être inséré entre le pôle P et l'inductance L.

On sait par ailleurs qu'il est difficile de réaliser des alimentations à découpage pour obtenir un fonctionnement correct lorsqu'elle n'est pas pleinement chargée (pour alimenter, par exemple, un récepteur télécommande à l'état de veille). Ici le problème ne se pose pas, puisque lorsque l'alimentation fonctionne, il y a toujours une charge minimale constituée par le circuit de balayage-ligne. Lorsque ce circuit ne fonctionne pas, l'alimentation ne fonctionne pas non plus, mais elle fournit une tension de sortie VSI de valeur inférieure à la tension nominale VS qui ne peut pas produire des dégâts, et qui peut, par exemple, permettre d'alimenter un récepteur de veille pour les récepteurs de télévision munis d'une télécommande.

Enfin le circuit de commande SC permet de bloquer le transistor T1 au début de chaque intervalle de retour-ligne, lorsque le circuit de suppression ou d'effacement a éteint le ou les spots sur le tube à rayons cathodiques. Ainsi, quels que soient les rayonnements parasites qui pourraient exciter les circuits de réception, les parasites ainsi produits n'entraîneront aucun effet visible sur l'écran du tube à rayons cathodiques.

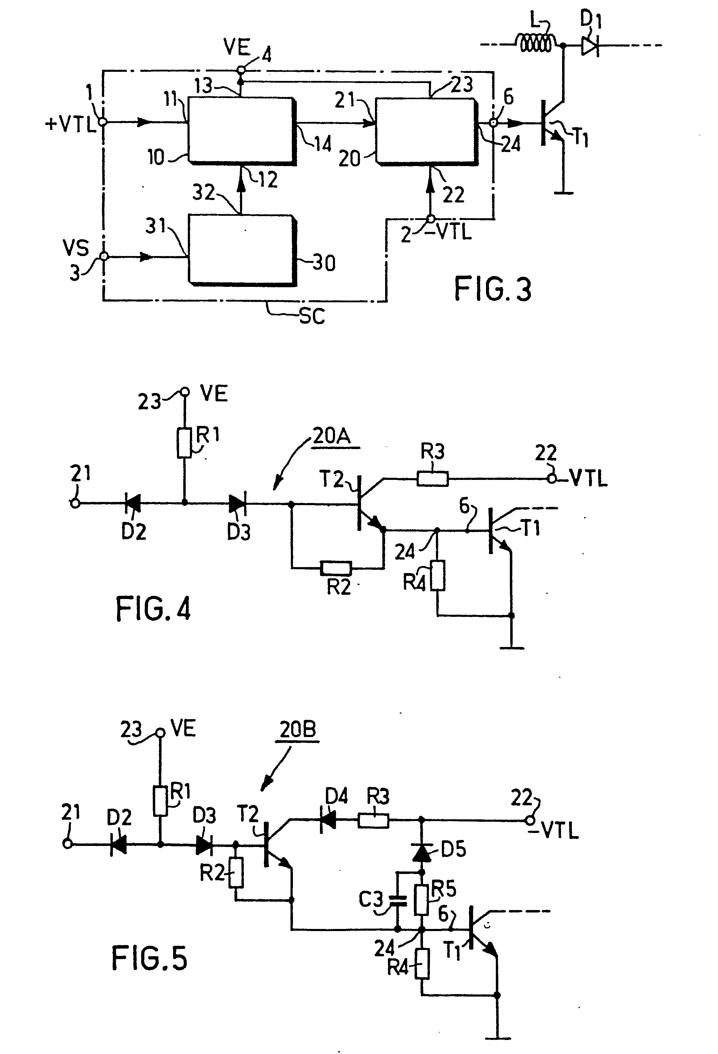

La figure 3 représente synoptiquement (en forme de bloc-diagramme) le circuit de commande SC de la figure 1.

Ce circuit de commande SC comporte un étage modulateur de la largeur d'impulsions 10 dont une première entrée 11, reliée à l'entrée 1, reçoit des impulsions de retour-ligne de polarité positive + VTL, provenant du second enroulement secondaire B3 du transformateur-ligne TL (voir figure 1) et dont une seconde entrée 12 reçoit une tension ou un courant continus, dits de régulation, dont le niveau est proportionnel à la différence entre la tension de sortie VS réelle et une valeur de consigne ou de référence constante, fournis par la sortie 32 d'un étage ou circuit régulateur 30 dont l'entrée 31 est reliée par l'intermédiaire de l'entrée 3 au pôle de sortie positif SP du dispositif d'alimentation BS fournissant la tension VS régulée. La variation du courant ou de la tension de régulation permet de faire varier l'instant où l'amplitude instantanée d'une forme d'onde de tension en dents de scie qui est soit à pente et amplitude sensiblement constantes, atteint le niveau de cette tension de régulation, soit à pente variable en fonction du courant de régulation (qui s'ajoute au courant de charge d'un condensateur), atteint le niveau prédéterminé d'une tension de référence (seuil) fixe, par rapport au début ou à la fin de la dent de scie. On obtient ainsi un signal rectangulaire à deux niveaux et de périodicité constante, définie par celle des impulsions de retour-ligne, dont le rapport cyclique varie en fonction du courant ou de la tension de régulation. Si l'on s'arrange, ce qui est possible, pour qu'une réduction de la tension de sortie VS par rapport à sa valeur nominale définie par la tension de référence, entraîne une augmentation du rapport cyclique et qu'une augmentation de VS ait l'effet inverse, on obtient une régulation de cette tension de sortie VS qui se stabilise à cette valeur nominale.

La sortie 14 du modulateur 10 alimente une première entrée 21 de l'étage d'attaque 20 du premier transistor de commutation T1, dont une seconde entrée 22 reçoit les impulsions de retour-ligne de polarité négative − VTL, en provenance du premier enroulement secondaire B2 du transformateur-ligne TL.

Les figures 4 et 5 illustrent deux modes de réalisation différents de l'étage d'attaque 20 de la figure 3, assurant un blocage efficace du premier transistor T1.

Sur la figure 4, l'étage d'attaque 20A comprend une troisième entrée d'alimentation 23, reliée au pôle positif (P) de la source de la tension d'entrée VE (non régulée) et à l'une des bornes d'une première résistance R1 (1,8 Kohms) dont l'autre borne est reliée en parallèle à l'anode de deux diodes D2 et D3 (du type IN4148). La seconde de ces diodes D3 a sa cathode reliée à la base d'un troisième transistor T2 de type NPN et à l'une des bornes d'une seconde résistance R2 (220 ohms). L'émetteur du troisième transistor T2 est relié à l'autre borne de la seconde résistance R2 et à la sortie 24 de l'étage 20A, qui est reliée par l'intermédiaire de la sortie 6 du circuit de commande SC à la base du premier transistor T1. Le collecteur du second transistor T2 est réuni par l'intermédiaire d'une troisième résistance R3 (10 ohms) à la seconde entrée 22 de l'étage 20A, recevant le signal − VTL qui comprend les impulsions de retour-ligne de polarité négative et, entre elles, des plateaux de niveau positif constant (valeur moyenne nulle). La base du premier transistor T1 est réunie à son émetteur et à la masse G, au moyen d'une quatrième résistance R4 (100 ohms). Le troisième transistor T2 est donc monté en collecteur commun.

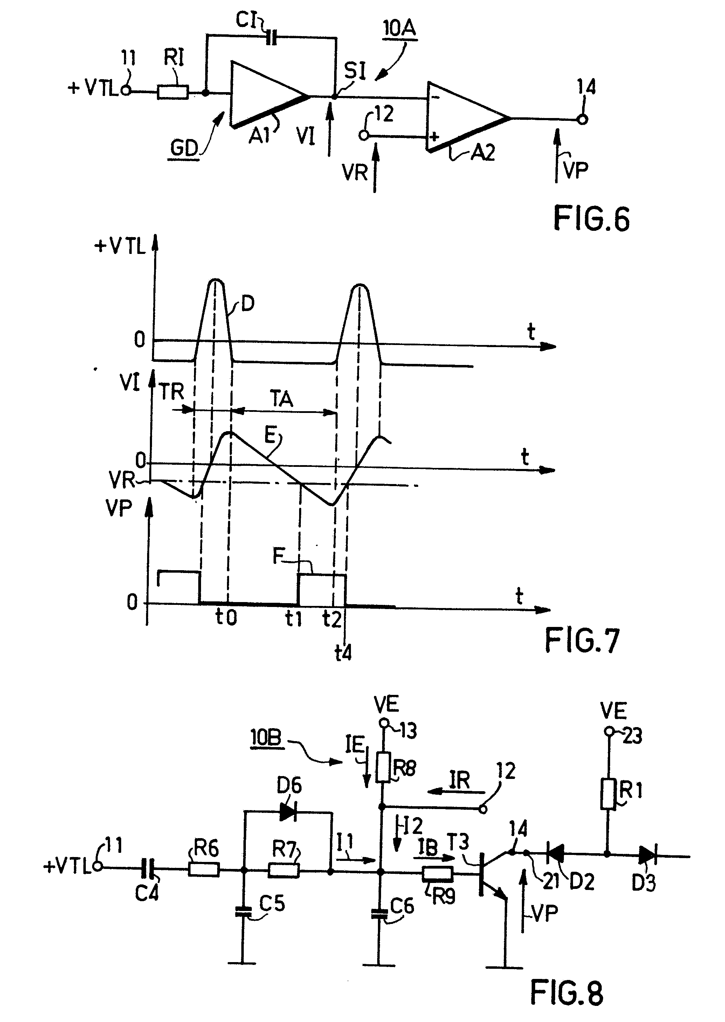

Lorsque la sortie 14 du modulateur 10 (figure 3) qui est reliée à l'entrée 21 de l'étage 20A, fournit un état bas, c'est-à-dire une tension proche de zéro, la diode D2 polarisée positivement, devient conductrice de sorte que son anode sera à une tension de quelques dizièmes de volt $(0,7 + V_{CEsat})$ qui est inférieure à la tension nécessaire pour rendre conductrices trois jonctions PN en série orientées dans le même sens, dont la première est constituée par la troisième diode D3, la seconde est la jonction base-émetteur du troisième transistor T2 et la troisième celle du premier transistor T1 qui restent bloqués. Lorsque la sortie 14 fournit par contre un état haut ou constitue un circuit ouvert (l'étage de sortie du modulateur 10 étant constitué par un transistor à collecteur ouvert), la diode D2 devient bloquée et la tension VE appliquée à l'entrée 23 provoque le passage d'un courant à travers la première résistance R1, la diode D3 et les jonctions base-émetteur respectives de transistors T2 et T1 connectées en série. Dans ces conditions et si, en même temps, la forme d'onde de tension − VTL appliquée au collecteur du transistor T3 présente son niveau positif constant, coïncidant avec les périodes de l'aller du balayage-ligne, les transistors T2 et T1 deviennent saturés simultanément avec l'effet décrit précédemment en ce qui concerne le dispositif d'alimentation BS de la figure 1. Par contre, lorsque la forme d'onde de tension − VTL appliquée au collecteur du troisième transistor T2 devient, au cours des périodes de retour-ligne, négative, le courant passe alors entre les bornes 23 et 22 de l'étage 20A, à travers la résistance R1, la diode D3, la jonction base-collecteur du troisième transistor T2 et la résistance R3. Le troisième transistor T2 fonctionne alors sur sa caractéristique de saturation symétrique, c'est-à-dire, il s'inverse de telle sorte que son collecteur devient émetteur et vice-versa. Il conduit alors un courant en sens inverse entre la masse et l'entrée 22 (négative) à travers la résistance R4 aux bornes de laquelle il provoque, après l'évacuation des porteurs minoritaires de la base du premier transistor T1 à travers le troisième transistor T2, une chute de tension polarisant celle-ci négativement par rapport à son émetteur. Cette tension négative appliquée à la base du transistor T1 par l'intermédiaire du transistor T2 saturé à l'envers, permet une réduction notable du temps de stockage et son blocage rapide. Comme le générateur en dents de scie du modulateur de la largeur d'impulsions 10 décrit plus loin, est commandé par des impulsions de retour-ligne positives, le signal rectangulaire appliqué par sa sortie 14 (figure 7) à l'entrée 21 de l'étage 20A subit, au cours de la période de retour-ligne suivant le blocage du premier transistor T1, une transition de son état haut à son état bas qui entraîne la conduction de la diode D2 et, par conséquent, le blocage du troisième transistor T2 (inversé) avant que la forme d'onde -VTL ne devienne positive et ne repolarise ce transistor T2 à l'endroit.

La figure 5 montre le schéma de principe d'un autre mode de réalisation du circuit d'attaque 20 de la figure 3, désigné par 20B, qui n'a été modifié par rapport au circuit 20A de la figure 4 qu'en ce qui concerne le circuit collecteur du troisième transistor T2 et le circuit de base du premier T1.

Cette modification est plus particulièrement destinée au cas où l'amplitude crête négative de la forme d'onde de tension − VTL appliquée à la base du dernier (T1) par l'intermédiaire de la résistance R3 et le trajet émetteur-collecteur du troisième transistor T2 saturé à l'envers, dépasserait la tension de claquage inverse par effet d'avalanche (Zener) de l'une des jonctions base-émetteur ou base-collecteur du premier transistor T1. Ceci peut se produire lorsque le premier enroulement secondaire B2 du transformateur ligne TL est également utilisé à d'autres fonctions dans le récepteur de télévision.

Pour empêcher le troisième transistor T2 de saturer à l'envers (symétriquement), le circuit 20B comporte une quatrième diode D4 insérée entre l'entrée 22 recevant la forme d'onde de tension − VTL et le collecteur de celui-ci, en série avec la résistance R3 et polarisée pour conduire dans le même sens que son trajet collecteur-émetteur. L'entrée 22 y est, en outre, reliée à la cathode d'une cinquième diode D5 (1N4148) dont l'anode est réunie par l'intermédiaire d'un montage composé d'une cinquième résistance R5 (330 ohms et d'un troisième condensateur C3 (1nF) connectés en parallèle, à la base du premier transistor T1.

La diode D5 permet d'isoler la base du transistor T1 de l'entrée 22, lorsque la forme d'onde −VTL est positive, et de les réunir ensemble au moyen d'un diviseur de tension résistif formé par les résistances R5 et R4 en série, lorsqu'elle devient négative. Le condensateur C3 permet d'accélérer le blocage en favorisant la transmission à la base de T1 des transitions raides des impulsions de retour-ligne négatives.

La figure 6 est un schéma, en partie synoptique, d'un mode de réalisation possible du modulateur de la largeur d'impulsions 10 du circuit de commande SC de la figure 3. Les diagrammes D, E et F de la figure 7 représentent les formes d'onde des tensions respectivement appliquées à l'entrée 11 (+ VTL) et fournies par la sortie SI (VI) du générateur de dents de scie GD et par la sortie 14 (VP) du circuit 10A.

Le modulateur 10A de la figure 5 comprend un générateur de dents de scie GD constitué par un circuit intégrateur classique comprenant un premier amplificateur A1 (opérationnel intégré, par exemple), une résistance d'intégration RI insérée en série entre l'entrée 11 recevant la forme d'onde de tension + VTL illustrée par le diagramme D de la figure 7 et fournie par le second enroulement secondaire B3 du transformateur-ligne TL, et l'entrée (inverseuse) de l'amplificateur A1, ainsi qu'un condensateur d'intégration CI connecté entre cette entrée et la sortie SI de l'amplificateur A1 (contre-réaction capacitive). En réponse à cette forme d'onde + VTL, la sortie de l'amplificateur A1 constituant celle SI du générateur GD fournit une forme d'onde de tension VI illustrée par le diagramme E de la figure 7 qui comprend, durant l'intervalle entre les instants t0 et t2 correspondant à l'intervalle de l'aller du balayage TA, une tension linéairement décroissante entre une valeur maximale (positive) et minimale (négative), et au cours des intervalles de retour-ligne précédent l'instant t0 et succédant à l'instant t2, des tensions croissantes, sensiblement de forme demi cosinusoïdale.

La tension VI est appliquée à l'une des entrées (−) d'un comparateur de tension analogique qui peut être réalisé au moyen d'un second amplificateur A2 de type différentiel (opérationnel intégré), dont l'autre entrée (+) reliée à l'entrée 12 du modulateur 10A, reçoit la tension de régulation VR fournie par l'étage régulateur (30 de la figure 3). Cette tension de régulation VR qui est obtenue en comparant la tension de sortie VS du dispositif d'alimentation BS du circuit de la figure 1, à une tension de référence (VZ fournie par une diode Zener, par exemple), est une tension continue subissant des variations lentes, représentée sur le diagramme E de la figure 7 par des traits mixtes.

Lorsque la forme d'onde VI appliquée à l'entrée inverseuse ( − ) du comparateur A2 est supérieure à la tension de régulation VR, ce qui est le cas dans l'intervalle entre les instants t0 et t1, sa sortie reliée à la sortie 14 du modulateur 10A fournit un état bas. Lorsque par contre, elle (VI) atteint ou devient inférieure à VR, ce qui se produit à partir de l'instant t1, la sortie 14 du modulateur 10A fournit un état haut (qui provoque la saturation du premier transistor T1. Cet état haut persiste jusqu'à l'instant t4 postérieur à l'instant t2 du début de l'impulsion de retour-ligne suivante dont le front avant commande le blocage du premier transistor T1, lorsque la forme d'onde VI redevient supérieure à la tension de régulation VR. On obtient donc à la sortie 14 du modulateur 10A un signal rectangulaire VP représenté sur le diagramme F de la figure 7, composé successivement d'un niveau bas (nul ou négatif) débutant pendant la première moitié de l'intervalle de retour-ligne TR et allant jusqu'à l'instant t1, et d'un niveau haut allant de l'instant t1 jusqu'à l'instant t4. L'instant t1 de la transition positive du signal VP, qui détermine le début de la conduction du premier transistor T1 est donc situé pendant l'intervalle de l'aller du balayage TA et sa position par rapport au début t0 ou à la fin t2 de celui-ci, varie en fonction de la tension de régulation VR. Lorsque la tension de régulation VR est négative, (comme sur le diagramme E de la figure 7), une fraction prédéterminée de la tension de sortie VS est supérieure à la tension de référence, et la durée de l'impulsion positive (t2 − t1) est inférieure à la moitié de l'intervalle de l'aller du balayage TA. Dans le cas contraire, cette durée (t2 − t1) est supérieure à TA/2. La modification de cette durée (t2 − t1) et donc du rapport cyclique, est effectuée en sens inverse de la variation de la tension de sortie VS afin de la stabiliser à un niveau préalablement réglé, par rapport à cette tension de référence. On peut également appliquer la forme d'onde − VTL à l'entrée 11 du modulateur 10A. Dans ce cas, il faut également inverser les entrées du comparateur A2.

Pour avoir des limites de fonctionnement convenables, compte tenu notamment de la valeur de l'inductance L, le rapport cyclique des durées (t2 − t1) doit varier entre 0, cas où la tension d'entrée VE est égale à la tension de sortie VS nominale, et environ deux tiers, cas où la puissance maximale est fournie pour une tension minimale à l'entrée.

Il faut aussi que le rapport entre la tension alternative parasite en sortie et la tension alternative en entrée, permette d'obtenir une image qui ne soit pas perturbée pour l'œil. Une valeur inférieure ou égale à un centième pour ce rapport donne des résultats satisfaisant.

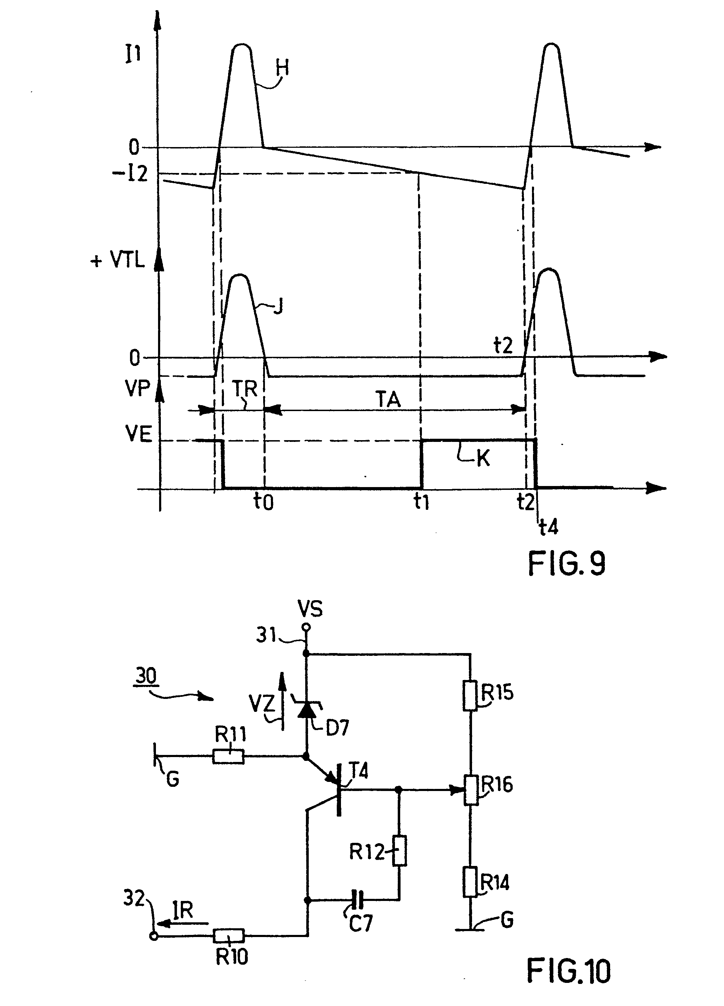

La figure 8 représente le schéma de principe d'un mode de réalisation pratique (au moyen de composants discrets) du modulateur de la largeur d'impulsions 10 de la figure 3. Différentes formes d'ondes d'un courant I1 et des tensions d'entrée + VTL et de sortie VP sont respectivement illustrées par les diagrammes H, J et K de la figure 9.

L'entrée 11 du modulateur 10B de la figure 8 reçoit la forme d'onde de tension + VTL qui peut être fournie soit directement par le second enroulement secondaire B3 du transformateur-ligne TL, soit par l'intermédiaire d'un condensateur de couplage dont une armature est reliée au collecteur du transistor de balayage TH (voir figure 1). Cette entrée 11 alimente un circuit de mise en forme passif, fournissant des dents de scie négatives (décroissantes) pendant les intervalles de l'aller du balayage TA. Ce circuit passif comporte un quatrième condensateur C4 (0,1 μF) de couplage dont une armature est reliée à l'entrée 11 et dont l'autre est reliée à l'une des bornes d'une sixième résistance R6 (10 kiloohms). L'autre borne de cette résistance R6 est reliée à l'une des bornes d'une septième résistance R7 (5,6 kohms) à l'une des armatures d'un cinquième condensateur C5 (5,6 nF) et à l'anode d'une sixième diode D6. L'autre armature du condensateur C5 est reliée à la masse G. La cathode de la sixième diode D6 et l'autre borne de la résistance R7 sont reliées ensemble à l'une des bornes d'une huitième résistance R8 (22 kohms), à celle d'une neuvième résistance R9 (470 ohms), à l'une des armatures d'un sixième condensateur C6 (4,7 nF) et à l'entrée de régulation 12 du modulateur 10B, qui est reliée à la sortie 32 de l'étage régulateur 30 (voir figure 3). L'autre armature du condensateur C6 est reliée à la masse. L'autre borne de la résistance R8 est reliée à l'entrée d'alimentation 13 du modulateur 10B, recevant la tension d'entrée VE. L'autre borne de la neuvième résistance R9 est reliée à la base d'un quatrième transistor T3 de type NPN, qui constitue l'étage comparateur de tension, dont l'émetteur est relié à la masse et dont le collecteur (ouvert) qui constitue la sortie 14 du modulateur 10B, est reliée à l'entrée 21 de l'étage d'attaque 20A (de la figure 4) ou 20B (de la figure 5), constituée par la cathode de la seconde diode D2. La valeur du condensateur C6 a été choisie de façon à limiter la tension négative maximale appliquée à la jonction base-émetteur du transistor T3 à une valeur inférieure à sa tension de claquage par effet avalanche (Zener).

Lorsque la forme d'onde de tension d'entrée + VTL est positive, comme pendant la majeure partie des intervalles de retour-ligne TR, la diode D6 court-circuite la résistance R7 et l'on est en présence d'un simple intégrateur RC passif composé de la résistance R6 en série et des deux condensateurs C5 et C6 en parallèle, qui est relié à la base du transistor T3 par la résistance R9. Le transistor T3 devient donc conducteur lorsque son courant de base IB constitué par la somme des courants I1 et I2 devient positif. Le courant I1 représenté par une flèche sur la figure 8 et sur le diagramme H de la figure 9, résulte de Iplication de la forme d'onde + VTL du diagramme J au simple intégrateur sus-mentionné, pendant son alternance positive, et au double intégrateur en cascade R6, C5, R7, C6, pendant son plateau négatif allant de t0 à t2. Pendant ce plateau de tension négatif du signal + VTL, le courant I1 devient négatif et linéairement décroissant. Lorsque l'amplitude négative instantanée du courant I1 devient égale au courant positif I2 représenté par une autre flèche sur la figure 8 et au moyen d'un niveau constant inversé (− I2) indiqué par des tirets sur la figure 7, ce qui se produit à l'instant t1, le courant de base du transistor T3 s'annule et celui-ci devient bloqué. Le courant I2 étant dû en majeur partie au courant de régulation IR fourni par la sortie de l'étage régulateur (30 de la figure 3) et proportionnel à la tension d'erreur, la durée de l'état bloqué (t4 − t1) du transistor T3 et, par conséquent, celle (t2 − t1) de l'état saturé du premier transistor T1 (ainsi que le rapport cyclique) variera en sens inverse de la variation de ce courant IR. Le courant IE indiqué par une flèche sur la figure 8, qui parcourt la résistance R8 de forte valeur en provenance de la source de tension d'entrée VE et qui est l'une des composantes avec IR du courant I2, constitue un faible courant servant à maintenir le transistor T3 saturé en l'absence d'impulsions de retour-ligne et donc de balayage. Le fait que la résistance R8 est alimentée par la tension d'entrée VE non régulée, permet d'ajouter un autre paramètre agissant sur le rapport cyclique de conduction du transistor T3 en fonction de cette dernière. Le diagramme K de la figure 9 illustre le signal rectangulaire VP obtenu à la sortie 14 du modulateur 10B de la figure 8.

La figure 10 est le schéma de principe classique de l'étage régulateur 30 du circuit de commande de la figure 3. Il est constitué essentiellement par un montage bien connu appelé amplificateur différentiel ayant deux entrées dont la première reçoit une fraction réglable de la tension à stabiliser, constituée, dans le cas présent, par la tension de sortie VS du dispositif d'alimentation (BS, figure 1) et dont la seconde entrée reçoit une tension de référence stable qui est généralement élaborée à l'intérieur de cet étage (comme dans la plupart des régulateurs de tension à découpage ou à ballast connus).

La tension de référence VZ est élaborée ici au moyen d'une diode Zener D7 (du type BZX83C ayant une tension de Zener stabilisée de 7,5 V) dont la cathode est reliée à l'entrée 31 recevant la tension de sortie VS du dispositif BS (figure 1) et dont l'anode est réunie par l'intermédiaire d'une onzième résistance R11 (10 Kohms) à la masse G. La seconde entrée de l'amplificateur différentiel utilisé ici est constituée par l'émetteur d'un cinquième transistor T4 de type PNP qui est relié à l'anode de la diode Zener D7. La tension (VS-VZ) polarisant cet émetteur est donc fixe par rapport à la tension de sortie VS. La première entrée de l'amplificateur différentiel est constituée ici par la base du transistor T4 qui est polarisée par un montage diviseur de tension, composé d'une quinzième résistance R15 (4,7 Kohms), d'un potentiomètre R16 (5 Kohms) et d'une quatorzième résistance R14 (22 Kohms) connectés en série entre la borne d'entrée 31 et la masse G. La base du transistor T4, reliée au curseur du potentiomètre R16 reçoit donc une fraction préalablement réglée de la tension de sortie VS alimentant le circuit de balayage ligne (SH), de telle sorte qu'il constitue un générateur de courant constant, proportionnel à sa tension émetteur-base qui est égale à la différence (tension d'erreur) entre la tension de référence VZ et la fraction de la tension de sortie VS fournie par le potentiomètre R16. Le collecteur du quatrième transistor T4, réuni par une dixième résistance R10 (2,2 Kohms) à la sortie 32, fournit donc le courant de régulation IR à l'entrée de régulation (12, figures 3 et 8) du modulateur de la largeur d'impulsion (10 ou 10B, figures 3 et 8).

On notera ici qu'un circuit de contre-réaction comprenant une douzième résistance R12 (5,6 Kohms) et un septième condensateur C7 (4,7 nF) en série réunit le collecteur du transistor 14 à sa base.

La différence entre les tensions respectivement fournies par le potentiomètre R16 et la diode Zener D7, provoque une conduction plus ou moins forte du transistor T4 qui débite la courant IR.

En définitive, lorsque la tension de sortie VS croît, la tension sur (VS-VZ) l'émetteur du transistor T4 augmente plus que celle appliquée à sa base et le courant IR augmente. La valeur de I1 pour laquelle le transistor T3 se bloque croît donc en valeur absolue et ce transistor T3 se bloque plus tardivement, ce qui diminue la durée de conduction du transistor T1. Le courant crête dans l'inductance L diminue alors, ce qui entraîne une diminution de la tension de sortie VS qui revient à sa valeur nominale, compte tenu de l'erreur résiduelle nécessaire pour le fonctionnement asservi.

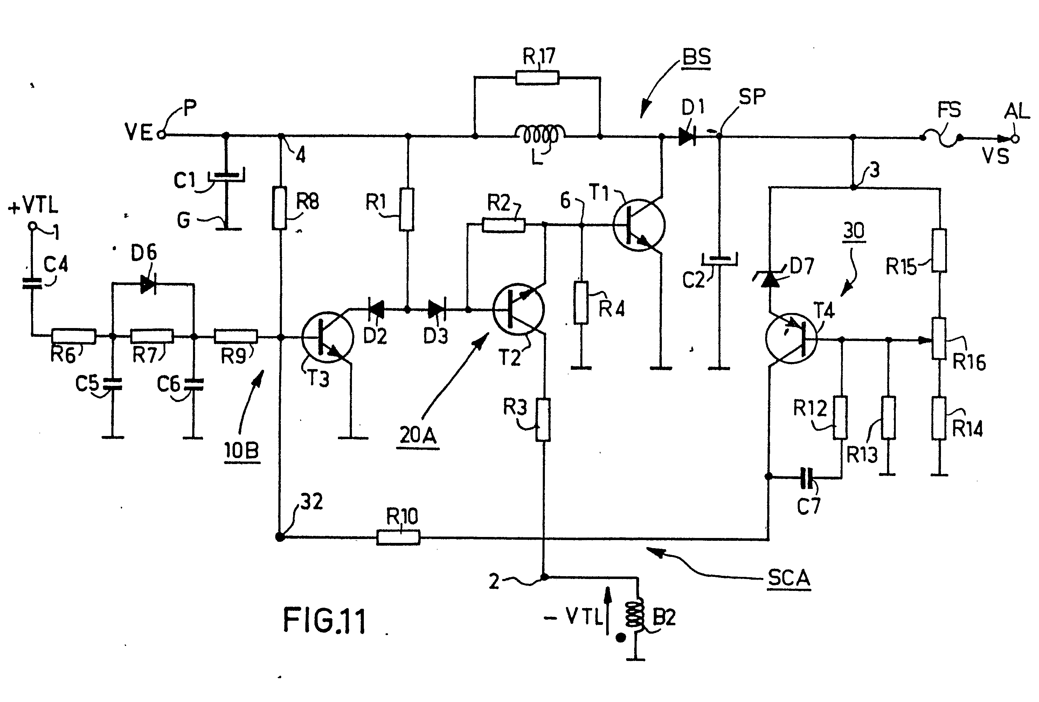

La figure 11 représente le schéma de principe complet d'un dispositif d'alimentation BS de la figure 1 dont le circuit de commande SC est respectivement constitué par le circuit d'attaque 20A de la figure 4, par le modulateur 10B de la figure 8 et l'étage régulateur 30 de la figure 10, à quelques variantes près.

Les variantes concernent une résistance d'amortissement R17 de 1 kiloohm shuntant l'inductance L, la résistance R8 et la résistance R10 qui sont toutes deux connectées directement à la base du transistor T3 au lieu d'être connectées à la cathode de la diode D6, la résistance R11 qui a été supprimée, et une résistance R13 qui shunte le curseur du potentiomètre R16 à la masse. Ces détails de réalisation n'influent en rien sur le fonctionnement du circuit tel qu'il a été décrit plus haut, mais permettent seulement un réglage plus aisé.

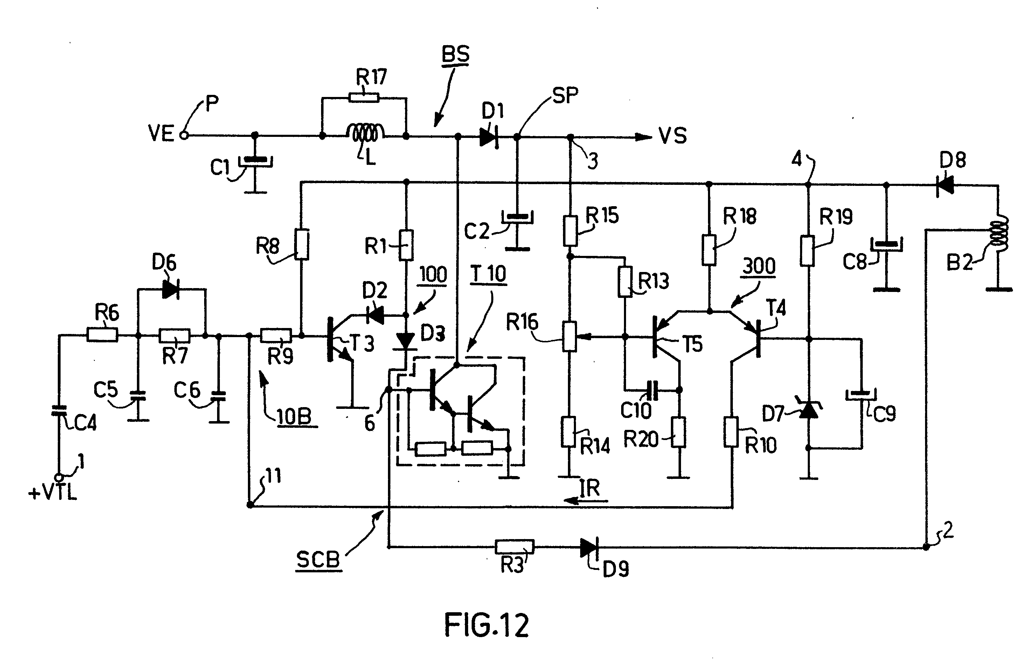

Un autre exemple de réalisation est représenté sur la figure 12. Il permet plus spécialement d'alimenter un téléviseur dans lequel le circuit de balayage ligne fonctionne à partir d'une tension continue VS plus élevée, d'environ 100 volts par exemple, elle-même obtenue à partir d'une tension de sortie initiale VSI d'environ 60 volts. Le fonctionnement du circuit est fondamentalement le même que celui de la figure 11 et on ne décrira ci-dessous que les différences. Les composants ayant la même fonction dans les deux schémas portent les mêmes références. Les valeurs peuvent toutefois être différentes mais leur dimensionnement est à la portée de l'homme de l'art. La tension VS délivrée par l'alimentation est utilisée principalement dans le circuit de balayage-ligne qui est l'organe consommant le plus de puissance dans le téléviseur. Les organes de l'alimentation recevant en permanence une tension lorsque le circuit de balayage-ligne ne fonctionne pas, mais que le secteur est connecté, sont uniquement ceux indispensables pour le démarrage de l'alimentation, c'est-à-dire le transistor de découpage T1 et le circuit de mesure de l'étage régulateur 300

Pour simplifier l'étage d'attaque 100, on a utilisé à la place du transistor de découpage T1 un montage Darlington T10 intégré du type BU 807, par exemple. Dans ces conditions, le gain est suffisant pour ne pas utiliser un transistor d'attaque T2 discret et connecter directement la cathode de la diode D3 à l'entrée de base de T10. Les impulsions négatives — VTH, provenant d'une prise intermédiaire sur le bobinage B2 du transformateur de sortie ligne, sont appliquées directement à la base de T10 par l'intermédiaire de la résistance R3 qui est connectée en série avec une diode D9 dont la cathode est reliée à cette prise intermédiaire.

A la place de la tension d'entrée VE, on utilise ici pour alimenter l'entrée d'alimentation 4 du circuit de commande SCB, une tension obtenue en redressant les alternances positives (plateaux) de la tension — VTL fournie par le premier enroulement secondaire B2 à l'aide d'une diode D8 et d'un condensateur C8. On obtient ainsi une tension nettement moins importante que celle qui d'alimenter le circuit de balayage ligne, de l'ordre de 13 volts par exemple. Une tension de cette valeur permet d'alimenter des circuits d'amplification vidéo ainsi qu'éventuellement d'autres circuits du téléviseur, en obtenant pour ceux-ci une très grande fiabilité. Cette tension est appliquée par la résistance R1 aux anodes des diodes D2 et D3, et par la résistance R8, à la base du transistor T3 du modulateur 10B.

L'étage régulateur 300 comporte ici deux transistors PNP T4 et T5 montés de manière différentielle. Pour cela leurs émetteurs reçoivent la tension redressée par D8 par l'intermédiaire d'une résistance R18 de 1,5 kiloohms. Le collecteur du transistor T5 est réuni à la masse par l'intermédiaire d'une résistance R20 de 3,9 kiloohms, et le collecteur du transistor T4, qui fournit le courant de régulation IR, est réuni à la cathode de la diode D6 par l'intermédiaire d'une résistance R10 de 4,7 kiloohms.

La tension de référence (6,2 volts) est fournie par une diode Zener D7 dont l'anode est connectée à la masse, et la cathode à une résistance R19 (6,8 kiloohms) qui reçoit la tension redressée par D8. Cette tension de référence est appliquée sur la base du transistor 14. Un condensateur C9 (47 microfarads) shunte la diode D7 de manière à faire monter progressivement la tension de référence lors de la mise sous tension de l'appareil, ce qui permet d'obtenir une montée progressive de la tension de sortie VS.

Un potentiomètre R16 de 10 kiloohms connecté entre deux résistances de butée R15 (68 kiloohms) et R14 (5,6 kiloohms) reçoit la tension VS par la résistance R15 et il est connecté à la masse par la résistance R14. Le curseur de potentiomètre R16 permet d'appliquer sur la base de T5 une fraction de la tension VS. Une résistance R13 (47 kiloohms) relie également cette base au point commun à R15 et R16.

Un condensateur anti-oscillation C10 (15 nanofarads) relie la base et le collecteur du transistor T5.

Ainsi le courant de régulation IR fourni par la résistance R10 est directement fonction de la différence entre la tension de sortie VS, appliquée au circuit de balayage ligne et la tension de référence déterminée par la diode Zener D7. L'alimentation BS stabilise donc cette tension VS, et par la même occasion la tension redressée fournie par la diode D8.

Pour arrêter cette alimentation, ainsi d'ailleurs que celle de la figure 11, il suffit de couper, à l'aide d'un récepteur de télécommande par exemple, le fonctionnement de l'oscillateur du balayage-ligne.

Dans ce cas, la tension d'entrée VE est toujours présente, mais elle est nettement plus faible que la tension VS. Pour l'alimentation de la figure 12, cette tension réduite n'est appliquée qu'au transistor Darlington D10 et à la base du transistor T5 de l'étage régulateur 300. On augmente ainsi la durée de vie des autres organes du dispositif BS. Comme la tension fournie par la diode D8 est elle même régulée, on peut l'utiliser pour alimenter l'ensemble du téléviseur, à l'exception du circuit de balayage-ligne alimenté par la tension VS et du récepteur de télécommande qui doit être capable de fonctionner en permanence (également en état de veille) pour déceler le signal de mise en marche. La protection dont on a parlé plus haut est donc alors étendue à la plus grande partie des organes du téléviseur.

On remarquera ici que les trois étages 10, 20, et 30 du circuit de commande SC (voir figures 1 et 3) peuvent être réalisés au moyen de circuits différents de ceux décrits et représentés, qui sont connus en soi, et qu'il suffit de disposer d'un enroulement secondaire B2 (en plus de l'enroulement de très haute tension) du transformateurligne TL, fournissant des impulsions de retourligne négatives que l'on peut utiliser pour engendrer une forme d'onde de tension en dents de scie croissantes ou décroissantes ainsi que pour commander le blocage du transistor de découpage T1.

**Revendications**

1. Dispositif d'alimentation (BS) à augmentation de niveau et à régulation de sa tension de sortie par découpage, combiné à un circuit de balayage-ligne (SH) d'un récepteur de télévision, dont il alimente l'étage de sortie (OS) et qui comprend en cascade un oscillateur-ligne (OH), un étage d'attaque (HD) et ledit étage de sortie comprenant un transistor de balayage (TH) en série avec l'enroulement primaire (B1) d'un transformateur-ligne (TL), ce dispositif (BS) comprenant une inductance (L) et le trajet collecteurémetteur d'un transistor de découpage (T1) connectés en série entre les pôles (P,N) d'une source (TS, R, C1) de tension continue d'entrée (VE), une diode de redressement (D1) connectée par son anode à la jonction entre l'inductance (L) et le collecteur du transistor de découpage (T1) et par sa cathode à l'une des armatures d'un condensateur de filtrage (C2) dont l'autre armature est connectée à l'émetteur du transistor de découpage (T1), de façon à fournir entre ses armatures une tension continue initiale, inférieure de peu à la tension d'entrée (VE), lorsque le transistor de découpage (T1) est bloqué, et une tension continue de sortie (VS) régulée, de niveau supérieur à la tension d'entrée, lorsque le transistor de découpage (T1) est alternativement saturé et bloqué de manière récurrente, le niveau de cette tension de sortie (VS) étant fonction du rapport cyclique des états de ce transistor (T1), et unn circuit de commande (SC) alimentant la base du transistor de découpage (T1) et incluant un étage régulateur (30) comparant une fraction réglable de la tension de sortie (VS) à une tension de référence fixe et fournissant un courant (IR) ou une tension (VR) de régulation proportionnels à la différence entre ces tensions comparées, un modulateur de largeur d'impulsions (10) déclenché au moyen d'un signal récurrent, synchronisé avec les signaux de balayage-ligne et fournissant un signal rectangulaire (VP) dont le rapport cyclique varie en fonction du courant (IR) ou de la tension (VR) de régulation et un autre étage d'attaque (20) recevant le signal rectangulaire (VP) et commandant le transistor de découpage (T1), caractérisé en ce que, le dispositif d'alimentation (BS) alimentant également l'oscillateur-ligne (OH) et l'étage d'attaque (HD) du circuit de balayage-ligne (SH), le démarrage de la régulation et de l'augmentation de la tension de sortie (VS) est assuré par le démarrage autonome préalable du circuit de balayage-ligne tout entier (SH) lors de son alimentation par la tension initiale que fournit le dispositif d'alimentation (BS) dès sa mise sous tension, le circuit de balayage-ligne (SH) fournissant alors des impulsions récurrentes de déclenchement au modulateur de la largeur d'impulsions(10) et en ce que l'une des entrées d'alimentation (22) de l'autre étage d'attaque (20) reçoit directement une première forme d'onde de tension (− VTL) dont les alternances positives comportent des plateaux de tension constante et dont les alternances négatives comportent des impulsions de retour-ligne de polarité négative, fournie par un premier enroulement secondaire (B2) du transformateur ligne (TL), en vue de commander le blocage du transistor de découpage (T1) de manière sensiblement simultanée avec celui de balayage (TH).

2. Dispositif d'alimentation suivant la revendication 1, caractérisé en ce que l'autre circuit d'attaque (20) comporte un troisième transistor (T2) dont l'émetteur est relié à la base du transistor de découpage (T1) qui est du même type que le précédent, dont le collecteur est réuni, à travers l'entrée d'alimentation (22), au premier enroulement secondaire (B2) du transformateur ligne (TL) pour en recevoir la première forme d'onde (− VTL) et dont la base est couplée à la sortie (14) du modulateur de la largeur d'impulsions (10).

3. Dispositif d'alimentation suivant la revendication 2, caractérisé en ce que le collecteur du troisième transistor (T2) est relié, au moyen d'une résistance (R3) à l'entrée d'alimentation (22) et son émetteur est réuni, en outre, à celui du transistor de découpage (T1) au moyen d'une autre résistance (R4) de sorte que les impulsions de retour-ligne négatives, appliquées au collecteur du troisième transistor (T3) commandent sa saturation symétrique (inverse) de manière à polariser à l'envers la jonction base émetteur du transistor de découpage (T1).

4. Dispositif d'alimentation suivant la revendication 2, caractérisé en ce que le collecteur du troisième transistor (T2) est réuni à l'entrée d'alimentation (22) au moyen d'une quatrième diode (D4) conduisant dans le sens normal de son trajet collecteur-émetteur, et en ce que son émetteur est réuni, en outre, d'une part au moyen d'une résistance (R4), à l'émetteur du transistor de découpage (T1) et, d'autre part à l'entrée d'alimentation (22), au moyen d'une autre résistance (R5) et d'une cinquième diode (D5) conduisant dans le sens inverse à celui de la jonction base-émetteur du transistor de découpage (T1), afin de transmettre à la base de celui-ci des impulsions de retour-ligne négatives à travers un diviseur de tension formé par les deux résistances (R5, R4) en série.

5. Dispositif d'alimentation suivant la revendication 1, caractérisé en ce que le circuit d'attaque (20) comporte un troisième transistor dont l'émetteur est relié à la base du transistor de découpage, dont le collecteur est relié à celui de ce dernier pour former un montage dit de Darlington (T10) et dont la base couplée, par ailleurs, au modulateur de largeur d'impulsions (10), est réunie, en outre, par l'intermédiaire d'une résistance (R3) et d'une diode (D9) en série au premier enroulement secondaire (B2) du transformateur-ligne (TL) afin de commander le blocage simultané des transistors de montage Darlington (T10) en polarisant leurs jonctions base-émetteur respectives, connectées en série, simultanément à l'envers par des impulsions de retour-ligne négatives.

6. Dispositif d'alimentation suivant l'une des revendications précédentes, caractérisé en ce que le modulateur de largeur d'impulsions (10B), alimenté sur son entrée de commande (11) par une forme d'onde de tension ( + VTL) dont les alternances positives comprennent des impulsions de retour-ligne positives et dont les alternances négatives comprennent des plateaux de tension négative constante, comporte un circuit passif (T6, C5, R7, D6, C6) qui constitue un intégrateur simple au cours des alternances positives du fait que l'une de ses résistances (R7) est shuntée par une diode (D6) et qui est un intégrateur double en cascade au cours des alternances négatives de cette forme d'onde, de façon à fournir au cours des périodes de l'aller du balayage un courant négatif linéairement décroissant (I1) qui, ajouté au courant de régulation (IR) positif, alimente la base d'un quatrième transistor (T3) comparateur, afin que le blocage de ce dernier par l'égalité des courants négatifs et positif commande le début de la saturation du transistor de découpage (T1) de telle sorte que la durée de cette saturation varie en fonction inverse des variations de la tension de sortie (VS).

7. Dispositif d'alimentation suivant la revendication 6, caractérisé en ce que le transistor comparateur (T3) est polarisé, en outre, sur sa base au moyen d'une résistance (R8) qui la réunit au pôle positif (P) de la source de la tension d'entrée (VE), de telle sorte qu'il reste saturé en l'absence d'impulsions de retour-ligne fournies par le circuit de balayage-ligne, et qu'il maintienne dans ce cas le transistor de découpage (T1) bloqué.

8. Dispositif d'alimentation suivant l'une quelconque des revendications précédentes, caractérisé en ce que le circuit de commande (SC, SCA), à l'exception de l'étage régulateur (30) qui est alimenté par la tension de sortie (VS), est alimenté par la tension d'entrée (VE).

9. Dispositif d'alimentation suivant l'une quelconque des revendications 1 à 6, caractérisé en ce que la tension d'alimentation du circuit de commande (SCB), à l'exception de l'une des entrées de l'étage régulateur (30) recevant la tension de sortie (VS), est fournie par un enroulement secondaire (B2) du transformateur-ligne (TL), par l'intermédiaire d'un montage redresseur composé d'une diode (D8) et d'un condensateur de filtrage (C8).

## Claims

1. Supply device with level augmentation and having its output voltage regulated by chopping, combined with the line deflection circuit (SH) of a television receiver of which it feeds the output stage (OS) and comprising in cascade a line oscillator (OH), a driver stage (HD) and said output stage comprising a deflection transistor (TH) in series with the primary winding (B1) of a line transformer (TL), said device (BS) comprising an inductance (L) and the collector-emitter path of a chopper transistor (T1) connected in series between the poles (P, N) of a source (TS, R, C1) of a direct input voltage (VE), a rectifier diode (T1) connected at its anode to the junction between the inductance (L) and the collector of the chopper transistor (T1) and on its cathode to one of the coatings of a filter capacitor (C2) the other coating of which is connected to the emitter of the chopper transistor (T1), in a manner to feed between its coatings an initial direct voltage which in somewhat smaller than the input voltage (VE) when the chopper transistor (T1) is blocked, and a regulated direct output voltage (VS) having a level exceeding that of the input voltage when the chopper transistor (T1) is alternately saturated and blocked in recurrent manner, the level of this output voltage (VS) depending on the cyclic ratio of the states of this transistor (T1), and a control circuit (SC) feeding the base of the chopper transistor (T1) and including a regulator stage (30) comparing an adjustable fraction of the output voltage (VS) to a fixed reference voltage and providing a regulating current (IR) or voltage (VR) proportional to the difference between these compared voltages, a pulse width modulator (10) triggered by means of a recurrent signal which is synchronized with the line deflection signals, and providing a rectangular signal (VP) the cyclic ratio of which varies as a function of the regulating current (IR) or voltage (VR), and a further driver stage (20) receiving the rectangular signal (VP) and controlling the chopper transistor (T1), characterized in that, the supply device (BS) further feeding the line oscillator (OH) and the driver stage (HD) of the line deflection circuit (SH), the starting of the regulation and of the augmentation of the output voltage (VS) is ensured by the previous independent starting of the complete line deflection circuit (SH) when it is initially supplied with a voltage from the supply device (BS) immediately after the application of a voltage thereto, the line deflection circuit (SH) then providing recurrent pulses triggering the pulse width modulator (10), and in that one of the supply inputs (22) of the other driver stage (20) directly receives a first voltage waveform (− VTL) the positive periods of which comprise constant voltage steps and the negative periods of which comprise line flyback pulses of negative polarity, supplied by a first secondary winding (B2) of the line transformer (TL), in order to control the blocking of the chopper transistor (T1) substantially simultaneously with that of the deflection (TH).

2. Supply device according to claim 1, characterized in that the further driver circuit (20) comprises a third transistor (T2) the emitter of which is connected to the base of the chopper transistor (T1) which is of the same type as the first-mentioned transistor and the collector of which is connected to the first secondary winding (B2) of the line transformer (TL) through the supply input (22) in order to receive the first waveform (− VTL) therefrom, and the base of which is coupled to the output (14) of the pulse width modulator (10).

3. Supply device according to claim 2, characterized in that the collector of the third transistor (T2) is connected to the supply input (22) through a resistor (R3) and its emitter is further connected to that of the chopper transistor (T1) through another resistor (R4) in such a manner that the negative line flyback pulses which are applied to the collector of the third transistor (T3) control its symmetrical (reverse) saturation in a manner to reversely polarize the base-emitter junction of the chopper transistor (T1).

4. Supply device according to claim 2, characterized in that the collector of the third transistor (T2) is connected to the supply input (22) through a fourth diode (D4) conducting in the normal sense of its collector-emitter path, and in that its emitter is further connected, on the one hand, to the emitter of the chopper transistor (T1) through a resistor (R4) and, on the other hand, to the supply input (22) through another resistor (R5) and a fifth diode (D5) conducting in the reverse sense of that of the base-emitter junction of the chopper transistor (T1) in order to transmit to the base thereof negative line flyback pulses through a voltage divider formed by two series-connected resistors (R5, R4).

5. Supply device according to claim 1, characterized in that the driver circuit (20) comprises a third transistor the emitter of which is connected to the base of the chopper transistor, the collector of which is connected to that of the latter in order to form a Darlington stage (T10) and the base of which, being further coupled to the pulse width modulator (10), is further connected to the first secondary winding (B2) of the line transformer (TL) through a resistor (3) and a diode (D9) in series therewith, in order to control the simultaneous blocking of the transistors of the Darlington stage (D10) by simultaneously reversely polarizing their respective series-connected base-emitter junctions by negative line flyback pulses.

6. Supply device according to any of the preceding claims, characterised in that the pulse width modulator (10B), receiving on its control input (11) a voltage waveform ( + VTL) the positive periods of which comprise positive line flyback pulses and the negative periods of which comprise negative constant voltage steps, comprises a passive circuit (R6, C5, R7, D6, C6) forming a single integrator during the positive periods because one of its resistors (R7) is shunted by a diode (D6) and forming a double, cascade integrator during the negative periods of this waveform, in order to supply during the forward deflection periods a negative current (I1) decreasing in linear manner and which is added to the positive regulation current (IR) to feed the base of a fourth, comparator transistor (P3) so that the blocking thereof when the negative and positive currents equal eath other controls the beginning of the saturation of the chopper transistor (T1), in such a manner that the duration of this saturation varies as a reverse function of the output voltage (VS) variations.

7. Supply device according to claim 6, characterized in that the comparator transistor (T3) is further polarized on its base through a resistor (R8) connecting it to the positive pole (P) of the input voltage (VE) source, in such a manner that it remains saturated in the absence of line flyback pulses from the line deflection circuit, thus maintaining the chopper transistor (T1) in its blocked state.

8. Supply device according to any of the preceding claiums, characterized in that the control circuit (SC, SCA), with the exception of the regulator stage (30) which is fed by the output voltage (VS), is supplied by the input voltage (VE).

9. Supply device according to any of claims 1 to 6, characterized in that the direct supply voltage of the control circuit (SCB), with the exception of one of the inputs of the regulator stage (30) which receives the output voltage (VS), is supplied by a secondary winding (B2) of the line transformer (TL) through a rectified circuit composed of a diode (D8) and a filter capacitor (C8).

## Ansprüche

1. Versorgungsvorrichtung (BS), die mit Pegelerhöhung und Regelung ihrer Ausgangsspannung durch Zerhacken arbeitet, kombiniert mit einer Zeilenablenkschaltung (SH) eines Fernsehempfängers, deren Ausgangsstufe (OS) sie speist und die in Kaskadenschaltung einen Zeilenoszillator (OH), eine Ansteuerschaltung (HD) und die genannte Ausgangsstufe umfaßt, welche einen Ablenktransistor (TH) in Reihe mit der Primärwicklung (B1) eines Zeilentransformators (TL) enthält, wobei diese Vorrichtung (BS) versehen ist mit einer Induktivität (L), der Kollektor-Emitter-Strecke eines Zerhackertransistors (T1), die in Serie zwischen die Pole (P, N) einer Quelle (TS, R, C1) für eine Eingangsgleichspannung (VE) geschaltet sind, einer Gleichrichterdiode (D1), die an ihrer Anode mit dem Verbindungspunkt zwischen der Induktivität (L) und dem Zerhackertransistor (T1) und an ihrer Kathode mit einem der Beläge eines Siebkondensators (C2) verbunden ist, dessen anderer Belag mit dem Emitter des Zerhackertransistors (T1) verbunden ist, so daß zwischen seine Beläge, wenn der Zerhackertransistor (T1) gesperrt ist, eine Anfangsgleichspannung, die wenig geringer als die Eingangsspannung (VE) ist, und eine geregelte Ausgangsgleichspannung (VS) von höherem Pegel als die Eingangsspannung eingespeist wird, wenn der Zerhackertransistor (T1) abwechselnd und periodisch gesättigt und gesperrt wird, wobei der Pegel dieser Ausgangsspannung (VS) vom dem zyklischen Verhältnis der Zustände dieses Transistors (T1) abhängt, und einer Steuerschaltung (SC), welche die Basis des Zerhackertransistors (T1) ansteuert und versehen ist mit einer Regelstufe (30), welche einen einstellbaren Bruchteil der Ausgangsspannung (VS) mit einer festen Referenzspannung vergleicht und einen Regelstrom (IR) bzw. eine Regelspannung (VR) liefert, die proportional zur Differenz zwischen diesen verglichenen Spannung ist, einem Pulsbreitenmodulator (10), der mittels eines periodischen Signals ausgelöst wird, das mit den Zeilenablenksignalen synchronisiert ist, und der ein Rechtecksignal (VP) liefert, bei dem das zyklische Verhältnis in Abhängigkeit von dem Regelstrom (IR) bzw. der Regelspannung (VR) variiert, und einer weiteren Ansteuerstufe (20), die das Rechtecksignal (VP) empfängt und den Zerhackertransistor (T1) ansteuert, dadurch gekennzeichnet, daß die Versorgungsvorrichtung (BS) ferner den Zeilenoszillator (OH) und die Ansteuerstufe (HD) der Zeilenablenkschaltung (SH) speist und das Anlaufen der Regelung und der Erhöhung der Ausgangsspannung (VS) gewährleistet werden durch das vorherige selbständige Anlaufen der gesamten Zeilenablenkschaltung (SH), wenn diese durch die Anfangsspannung gespeist wird, welche die Versorgungsvorrichtung (BS) unmittelbar nach Anlegen von Spannung an diese liefert, wobei dann die Zeilenablenkschaltung (SH) periodische Auslösesignale dem Pulsbreitenmodulator (10) zuführt, und daß einer der Speiseeingänge (22) der anderen Ansteuerstufe (20) direkt eine erste Spannungssignalform (− VTL) empfängt, deren positive Perioden Stufen konstanter Spannung enthalten und deren negative Perioden Zeilenrücklaufimpulse negativer Polarität enthalten, und die von einer ersten Sekundärwicklung (B2) des Zeilentransformators (TL) geliefert wird, um die Sperrung des Zerhackertransistors (T1) im wesentlichen gleichzeitig mit dem Ablenktransistor (TH) zu steuern.

2. Versorgungsvorrichtung nach Anspruch 1, dadurch gekennzeichnet, daß die andere Ansteuerschaltung (20) einen dritten Transistor (T2) enthält, dessen Emitter mit der Basis des Zerhackertransistors (T1) verbunden ist, welcher von demselben Typ wie der erstgenannte ist und dessen Kollektor über den Speiseeingang (22) mit der ersten Sekundärwicklung (B2) des Zeilentransformators (TL) verbunden ist, um von dieser die erste Signalform (− VTL) zu empfangen, und dessen Basis an den Ausgang (14) des Pulsbreitenmodulators (10) angekoppelt ist.

3. Versorgungsvorrichtung nach Anspruch 2, dadurch gekennzeichnet, daß der Kollektor des dritten Transistors (T2) über einen Widerstand (R3) mit dem Speiseeingang (22) verbunden ist und sein Emitter ferner mit dem des Zerhackertransistors (T1) über einen weiteren Widerstand (R4) verbunden ist, so daß die negativen Zeilenrücklaufpulse, welche an den Kollektor des dritten Transistors (T3) angelegt werden, seine symmetrische Sättigung (in Rückwärsrichtung) steuern, so daß der Basis-Emitter-Übergang des Zerhackertransistors (T1) in Sperrichtung gepolt wird.

4. Versorgungsvorrichtung nach Anspruch 2, dadurch gekennzeichnet, daß der Kollektor des dritten Transistors (T1) mit dem Speiseeingang (22) über eine vierte Diode (D4) verbunden ist, welche in der normalen Richtung seiner Kollektor-Emitter-Strecke leitet, und daß sein Emitter ferner einerseits über einen Widerstand (R4) mit dem Emitter des Zerhackertransistors (T1) verbunden ist und andererseits mit dem Speiseeingang (22), verbunden ist über einen weiteren Widerstand (R5) und eine fünfte Diode (D5), die in umgekehrter Richtung wie die Basis-Emitter-Strecke des Zerhackertransistors (T1) leitet, um an die Basis desselben negative Zeilenrücklaufimpulse über einen Spannungsteiler anzulegen, der aus zwei in Reihe liegenden Widerständen (R5, R4) gebildet ist.

5. Versorgungsvorrichtung nach Anspruch 1, dadurch gekennzeichnet, daß die Ansteuerschaltung (20) einen dritten Transistor enthält, dessen Emitter mit der Basis des Zerhackertransistors verbunden ist, dessen Kollektor mit dem des letzteren verbunden. ist, um eine sogenannte Darlington-Schaltung (T10) zu bilden, und dessen Basis, die auch mit dem Pulsbreitenmodulator (10) verbunden ist, ferner über einen Widerstand (R3) und eine mit diesem in Reihe liegende Diode (D9) mit der ersten Sekundärwicklung (B2) des Zeilentransformators (TL) verbunden ist, um die gleichzeitige Sperrung der Transistoren der Darlington-Schaltung (T10) zu steuern, indem ihre jeweiligen, in Reihe geschalteten Basis-Emitter-Übergänge durch negative Zeilenrücklaufimpulse gleichzeitig in Sperrichtung gepolt werden.

6. Versorgungsvorrichtung nach einem der vorstehenden Ansprüche, dadurch gekennzeichnet, daß der Pulsbreitenmodulator (10B), der an seinem Steuereingang (11) durch eine Spannungssignalform ( + VTL) gespeist wird, deren positive Perioden positive Zeilenrücklaufimpulse enthalten und deren negative Perioden negative konstante Spannungsstufen enthalten, einen passiven Kreis (R6, C5, R7, D6, C6) umfaßt, der während der positiven Perioden, weil einer seiner Widerstände (R7) durch eine Diode (D6) überbrückt wird, einen einfachen Integrator bildet und während der negativen Perioden dieser Signalform einen doppelten bzw. Kaskadenintegrator bildet, so daß er während der Hinlaufperioden der Ablenkung einen negativen, linear abnehmenden Strom (I1) liefert, der dem positiven Regelstrom (IR) hinzugefügt wird und die Basis eines vierten Transistors (T3) speist, der ein Vergleicher ist, damit die Sperrung des letzteren durch Gleichheit des negativen Stromes und des positiven Stromes den Beginn der Sättigung des Zerhackertransistors (T1) steuert, so daß die Dauer dieser Sättigung in umgekehrter Abhängigkeit von der Änderung der Ausgangsspannung (VS) variiert.

7. Versorgungsvorrichtung nach Anspruch 6, dadurch gekennzeichnet, daß der Vergleichertransistor (T3) ferner an seiner Basis über einen Widerstand (R8) polarisiert wird, der sie mit dem positiven Pol (P) der Eingangsspannungsquelle (VE) verbindet, so daß er beim Ausbleiben von Zeilenrücklaufimpulsen aus der Zeilenablenkschaltung gesättigt bleibt und in diesem Fall den Zerhackertransistor (T1) gesperrt hält.

8. Versorgungsvorrichtung nach einem der vorstehenden Ansprüche, dadurch gekennzeichnet, daß die Steuerschaltung (SC, SCA) mit Ausnahme der Regelstufe (30), welche durch die Ausgangsspannung (VS) versorgt wird, durch die Eingangsspannung (VE) gespeist wird.

9. Versorgungsvorrichtung nach einem der Ansprüche 1 bis 6, dadurch gekennzeichnet, daß die Versorgungsleichspannung der Steuerschaltung (SCD), außer einem der Eingänge der Regelstufe (30), welcher die Ausgangsspannung (VS) empfängt, von einer Sekundärwicklung (B2) des Zeilentransformators (TL) über eine Gleichrichterschaltung geliefert wird, die aus einer Diode (D8) und einem Siebkondensator (C8) zusammengesetzt ist.

FIG.1

FIG.2

FIG.3

FIG.4

FIG.5

FIG.6

FIG.7

FIG.8

FIG.9

FIG.10

4

FIG.11

FIG.12